# FASCICULE DE BREVET EUROPEEN

(11) **EP 3 619 256 B1**
(45) Date de publication et mention de la délivrance du brevet: **07.02.2024**
(21) Numéro de dépôt: 18722991.9
(22) Date de dépôt: 07.05.2018
(51) Int. Cl.: C08J 5/04, C08G 63/672, C08G 63/183

(54) **PROCEDE DE FABRICATION D'UN MATERIAU COMPOSITE**
VERFAHREN ZUR HERSTELLUNG EINES VERBUNDWERKSTOFFES
METHOD FOR PRODUCING A COMPOSITE MATERIAL

(30) Priorité: 05.05.2017 FR 1754008
(43) Date de publication de la demande: 11.03.2020
(73) Titulaire: Roquette Frères, 62136 Lestrem (FR)
(72) Inventeur: AMEDRO, Hélène, 62400 Bethune (FR); CORPART, Jean-Marc, 59130 Lambersart (FR); JACQUEL, Nicolas, 59130 Lambersart (FR); SAINT-LOUP, René, 59160 Lomme (FR)
(74) Mandataire: Plasseraud IP
(86) Numéro de dépôt international: PCT/EP2018/061725
(87) Numéro de publication internationale: WO 2018/202918

(56) Documents cités:
- WO-A1-2016/066956
- WO-A1-2017/093685
- WO-A1-2018/024988
- FR-A1- 3 036 400

## Description

### Domaine de l'invention

La présente invention se rapporte au domaine des matériaux et concerne un procédé de fabrication d'un matériau composite à base de fibres naturelles et d'au moins un polyester thermoplastique présentant au moins un motif 1,4 : 3,6-dianhydrohexitol, qui peut présenter d'excellentes propriétés de résistance au choc.

### Arrière-plan technologique :

En raison de leurs propriétés mécaniques, les matériaux plastiques et notamment les matériaux thermoplastiques sont largement utilisés dans l'industrie pour la fabrication d'une multitude de produits. Ainsi, les industriels sont sans cesse à la recherche de nouveaux composés, tels que des polymères thermoplastiques, présentant des propriétés améliorées ou des nouveaux procédés permettant d'améliorer les propriétés des polymères existant.

A ce titre, afin d'augmenter la résistance mécanique des polymères, il est connu d'y incorporer des composés divers afin de créer des matériaux composites présentant des propriétés mécaniques améliorées. Ces composés divers jouent en quelques sortes le rôle de renfort améliorant substantiellement le comportement mécanique des polymères au sein desquels ils sont incorporés.

Depuis quelques années, le marché des matériaux composites ne cesse de se développer. Ainsi, de nombreux secteurs d'activité intègrent ces nouveaux matériaux dans la conception de leurs produits, tels que par exemple le médical, le sport, l'automobile, ou encore l'énergie verte. Les matériaux composites constituent de nouvelles sources d'innovation et offrent de nouvelles opportunités de croissance pour l'industrie.

Les matériaux composites, définis comme des matériaux constitués d'un renfort et d'une matrice, se distinguent des autres produits plastiques de synthèse par des caractéristiques qui leur permettent, avec des propriétés d'inaltérabilité et de faible poids, de pouvoir se substituer dans certains cas à des pièces métalliques.

Depuis de nombreuses années, les industriels à travers le monde réalisent des travaux visant à incorporer des matériaux d'origine naturelle aux plastiques. Ces travaux répondent au souci de préserver l'environnement tout en limitant les prélèvements de matières non renouvelables. Des fibres naturelles incorporées dans des matériaux thermoplastiques en remplacement des fibres de verre forment des composites déjà industrialisés et commercialisés.

Aujourd'hui, on trouve ces composites à base de fibres naturelles, également appelés biocomposites, dans une multitude de produit du quotidien tels que des pièces d'habillages d'intérieur automobile, des matériaux de constructions ou encore des articles de sports.

L'innovation sur ces biocomposites se développe fortement depuis quelques années et porte non seulement sur l'utilisation des fibres en tant que renfort, mais également sur la mise au point de résines en polymère thermoplastique de plus en plus biosourcées ainsi que sur les interactions entre ces fibres naturelles et les matrices.

Le document FR3036400 concerne un polyester thermoplastique comprenant au moins un motif 1,4 : 3,6-dianhydrohexitol, au moins un motif diol alicyclique autre que les motifs 1,4 : 3,6-dianhydrohexitol et au moins un motif acide téréphtalique de haute viscosité. Ce polyester peut être mélangé à des fibres végétales. Le document WO2016/066956 a trait à un procédé de fabrication de polyester comprenant au moins un motif 1 ,4 : 3,6-dianhydrohexitol, à l'aide d'un système catalytique permettant de réduire la coloration du polyester ainsi formé. De même, ce polyester peut être mélangé à des fibres végétales.

Cependant, une des difficultés de la fabrication des matériaux composites est de créer une bonne adhésion de la fibre à la matrice polymère. En effet, la cellulose, principal composant de la fibre végétale est peu compatible avec les matrices thermoplastiques classiques.

La nature hydrophile des fibres végétales est à l'origine du manque de compatibilité avec la matrice plus hydrophobe. Très peu de liaisons existent entre la phase "renfort" et la phase "matrice". Cette "incompatibilité" provoque une mauvaise dispersion des fibres dans la matrice et la formation d'un matériau hétérogène. Les fonctions hydroxyles de la cellulose forment des liaisons hydrogènes entres les chaînes de cellulose provoquant l'agrégation des fibres entre elles et la formation d'un composite dans lequel les fibres sont mal dispersées.
Une autre limitation à l'utilisation de fibres naturelles dans les composites, est leur capacité à retenir l'eau. L'eau se lie par liaisons intra et inter avec les groupements hydroxyles de la cellulose. Ainsi, l'eau contenue dans les mélanges peut alors altérer, voir rendre impossible, la mise en forme du matériau. En effet, la faible hydrophilie des résines usuellement employées dans la fabrication de composites thermoplastiques rend l'interface fibre/polymère très peu stable, nuisant ainsi aux propriétés mécaniques du composite obtenu.

Afin de pallier ces inconvénients, une des solutions peut consister à introduire un troisième élément compatible avec les fibres et la matrice et qui joue le rôle de liaison. D'autres solutions existent comme par exemple effectuer un traitement thermomécanique des fibres à l'origine d'une fibrillation de surface conduisant à un ancrage de la fibre dans la matrice ou encore sécher fortement les fibres avant l'incorporation. Ainsi, la grande majorité des procédés de fabrication des matériaux composites à base de matrice polymère et de fibres végétales mettent en oeuvre une étape de séchage. Or cette étape de séchage est fortement consommatrice d'énergie, entrainant ainsi des coûts non négligeables de fonctionnement lors de la mise en oeuvre des procédés de fabrication des composites. De plus, cette étape est également néfaste en ce qu'elle réduit fortement l'élasticité des fibres en raison de l'évaporation de l'eau initialement présente dans ces dernières, rendant ainsi le composite obtenu bien moins performant en ce qui concerne les propriétés de résistances aux chocs.

Au regard de la demande industrielle en termes de matières plastiques performantes aux propriétés améliorées, il existe continuellement un besoin de disposer de procédé permettant de les obtenir et permettant notamment d'obtenir des polymères thermoplastiques plus résistants avec des propriétés mécaniques améliorées, lesdits procédés étant plus faciles à mettre en oeuvre et surtout moins chers.

Il est ainsi du mérite de la Demanderesse d'avoir trouvé que cet objectif pouvait être atteint avec le procédé de fabrication selon l'invention.

### Résumé de l'invention

Un premier objet de l'invention concerne un procédé de fabrication d'un matériau composite, ledit procédé comprenant les étapes suivantes de :
a) fourniture d'un polymère thermoplastique,
b) fourniture de fibres naturelles,
c) préparation d'un matériau composite à partir desdites fibres naturelles et dudit polymère thermoplastique,
ledit procédé étant caractérisé en ce que les fibres naturelles ne sont pas séchées préalablement à la préparation du matériau composite et en ce que le polymère est un polyester thermoplastique comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio (A)/[(A)+(B)] étant d'au moins 0,05 et d'au plus 0,75, ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 50 mL/g.

Un second objet de l'invention concerne un matériau composite fabriqué à base de fibres naturelles et de polyester thermoplastique tels que précédemment définis. De par ses propriétés mécaniques, ce matériau trouve une application toute particulière pour la fabrication de pièces automobiles, pour une utilisation en tant que matériau de construction ou encore pour la fabrication d'articles de sports ou de loisirs.

### Description détaillée de l'invention

Un premier objet de l'invention concerne donc un procédé de fabrication d'un matériau composite, ledit procédé comprenant les étapes suivantes de :
a) fourniture d'un polymère,
b) fourniture de fibres naturelles,
c) préparation d'un matériau composite à partir desdites fibres naturelles et dudit polymère thermoplastique,
ledit procédé étant caractérisé en ce que le polymère est un polyester thermoplastique comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio (A)/[(A)+(B)] étant d'au moins 0,05 et d'au plus 0,75, ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 50 mL/g.D'une manière tout à fait surprenante, grâce au polyester thermoplastique utilisé, le procédé de fabrication selon l'invention ne nécessite pas obligatoirement un séchage des fibres naturelles préalablement à la préparation du matériau composite. En effet, l'homme du métier pensait jusqu'à présent que le séchage préalable à la préparation du matériau composite pour obtenir un matériau performant, qui n'est notamment pas sujet aux problèmes de mauvaise cohésion interfaciale entre les fibres et la matrice observés dans les matériaux composites mettant en oeuvre des fibres naturelles non séchées connus dans l'état de la technique, était un prérequis. Or, le procédé selon l'invention présente ainsi l'avantage de pouvoir être mis en oeuvre avec ou sans séchage des fibres naturelles préalablement à la préparation du matériau composite, et d'obtenir une bonne cohésion à l'interface fibre/matrice.

Les fibres naturelles ne sont pas séchées préalablement à la préparation du matériau composite, assurant ainsi une résistance au choc améliorée comparativement à des composites pour lesquels les fibres sont préalablement séchées.

Au sens de la présente invention, les termes « matériau composite » ou « biocomposite » sont considérés comme des synonymes. Un biocomposite est un matériau composite partiellement ou totalement dérivés de la biomasse, comme l'amidon ou la cellulose par exemple, le caractère biosourcé pouvant provenir du renfort et/ou de la matrice.

La première étape du procédé consiste à fournir un polymère. Le polymère utilisé selon le procédé de l'invention est un polyester thermoplastique tel que défini précédemment et constitue donc la matrice du matériau composite.

Le polyester thermoplastique est exempt de motifs diol aliphatique non cyclique ou comprend une quantité molaire de motifs diol aliphatique non cyclique.

Par « faible quantité molaire de motifs diol aliphatique non cyclique», on entend notamment une quantité molaire de motifs diol aliphatique non cyclique inférieure à 5%. Selon l'invention, cette quantité molaire représente le rapport de la somme des motifs diol aliphatique non cyclique, ces motifs pouvant être identiques ou différents, par rapport à la totalité des motifs monomériques du polyester.

D'une manière avantageuse, la quantité molaire de motif diol aliphatique non cyclique est inférieure à 1%. De préférence, le polyester est exempt de motif diol aliphatique non cyclique et plus préférentiellement, il est exempt d'éthylène glycol.

Un diol aliphatique non cyclique peut être un diol aliphatique non cyclique linéaire ou ramifié. Il peut également être un diol aliphatique non cyclique saturé ou insaturé. Outre l'éthylène glycol, le diol aliphatique non cyclique linéaire saturé peut par exemple être le 1,3-propanediol, le 1,4-butanediol, le 1,5-pentanediol, le 1,6-hexanediol, le 1,8-octanediol et/ou le 1,10-decanediol. Comme exemple de diol aliphatique non cyclique ramifié saturé, on peut citer le 2-methyl-1,3-propanediol, le 2,2,4-trimethyl-1,3-pentanediol, le 2-ethyl-2-butyl-1,3-propanediol, le propylèneglycol et/ou le néopentylglycol. Comme exemple de diol aliphatique insaturé, on peut citer par exemple le cis-2-butene-1,4-diol.

Malgré la faible quantité de diol aliphatique non cyclique, et donc d'éthylène glycol, utilisé pour la synthèse, il est obtenu un polyester thermoplastique présentant une viscosité réduite en solution élevée et dans lequel l'isosorbide est particulièrement bien incorporé.

Le monomère (A) est un 1,4 : 3,6-dianhydrohexitol peut être l'isosorbide, l'isomannide, l'isoidide, ou un de leurs mélanges. De préférence, le 1,4 : 3,6-dianhydrohexitol (A) est l'isosorbide.

L'isosorbide, l'isomannide et l'isoidide peuvent être obtenus respectivement par déshydratation de sorbitol, de mannitol et d'iditol. En ce qui concerne l'isosorbide, il est commercialisé par la Demanderesse sous le nom de marque POLYSORB^{®} P.

Le diol alicyclique (B) est également appelé diol aliphatique et cyclique. Il s'agit d'un diol qui peut notamment être choisi parmi le 1,4-cyclohexanedimethanol, le 1,2-cyclohexanedimethanol, le 1,3-cyclohexanedimethanol ou un mélange de ces diols. Très préférentiellement le diol alicyclique (B) est le 1,4-cyclohexanedimethanol. Le diol alicyclique (B) peut être dans la configuration cis, dans la configuration trans ou peut être un mélange de diols en configuration cis et trans.

Le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A), soit (A)/[(A)+(B)], est d'au moins 0,05 et d'au plus 0,75. Lorsque le ratio molaire (A)/[(A)+(B)] est inférieur à 0,30, le polyester thermoplastique est semi-cristallin et se caractérise par la présence d'une phase cristalline se traduisant par la présence de raie de diffraction aux rayons X et la présence d'un pic de fusion endothermique en analyse calorimétrique différentielle à balayage (DSC).

Par contre, lorsque le ratio molaire (A)/[(A)+(B)] est supérieur à 0,30, le polyester thermoplastique est amorphe et se caractérise par une absence de raies de diffraction aux rayons X et par une absence d'un pic de fusion endothermique en analyse calorimétrique différentielle à balayage (DSC).

Un polyester thermoplastique particulièrement adapté pour le procédé de fabrication selon l'invention comprend:
- une quantité molaire de motifs 1,4 : 3,6-dianhydrohexitol (A) allant de 2,5 à 54 % mol ;
- une quantité molaire de motifs diol alicyclique (B) autre que les motifs 1,4 : 3,6-dianhydrohexitol (A) allant de 5 à 42,5 % mol ;
- une quantité molaire de motifs acide téréphtalique (C) allant de 45 à 55 % mol.

En fonction des propriétés recherchées et des applications, l'homme de l'art peut adapter les quantités afin d'obtenir un polyester thermoplastique amorphe ou semi-cristallin.

Par exemple, si pour certaines applications on cherche à obtenir un matériau composite pouvant être opaque et présentant des propriétés mécaniques augmentées, le polyester thermoplastique peut être semi-cristallin et comprend ainsi :
- une quantité molaire de motifs 1,4 : 3,6-dianhydrohexitol (A) allant de 2,5 à 14 % mol ;
- une quantité molaire de motifs diol alicyclique (B) autre que les motifs 1,4 : 3,6-dianhydrohexitol (A) allant de 31 à 42,5 % mol ;
- une quantité molaire de motifs acide téréphtalique (C) allant de 45 à 55 % mol.

D'une manière avantageuse, lorsque le polyester thermoplastique est semi-cristallin il présente un ratio molaire (A)/[(A)+(B)] de 0,10 à 0,25.

A l'inverse, lorsque la transparence du matériau composite est recherchée le polyester thermoplastique peut être amorphe et comprend ainsi :
- une quantité molaire de motifs 1,4 : 3,6-dianhydrohexitol (A) allant de 16 à 54 % mol ;
- une quantité molaire de motifs diol alicyclique (B) autre que les motifs 1,4 : 3,6-dianhydrohexitol (A) allant de 5 à 30 % mol ;
- une quantité molaire de motifs acide téréphtalique (C) allant de 45 à 55 % mol.

D'une manière avantageuse, lorsque le polyester thermoplastique est amorphe il présente un ratio molaire (A)/[(A)+(B)] de 0,35 à 0,65.

De plus, l'homme de l'art peut aisément trouver les conditions d'analyse pour déterminer les quantités en chacun des motifs du polyester thermoplastique. Par exemple, à partir d'un spectre RMN d'un poly(1,4-cyclohexanedimethylène-co-isosorbide téréphtalate), les déplacements chimiques relatifs au 1,4-cyclohexanedimethanol sont compris entre 0,9 et 2,4 ppm et 4,0 et 4,5 ppm, les déplacements chimiques relatifs au cycle téréphtalate sont compris entre 7,8 et 8,4 ppm et les déplacements chimiques relatifs à l'isosorbide sont compris entre 4,1 et 5,8 ppm. L'intégration de chaque signal permet de déterminer la quantité de chaque motif du polyester.

Les polyesters thermoplastiques présentent une température de transition vitreuse allant de 85 à 200°C, par exemple de 90 à 115°C s'ils sont semi-cristallins et par exemple de 116°C à 200°C s'ils sont amorphes. Les températures de transition vitreuse et de fusion sont mesurées par les méthodes classiques, notamment en utilisant la calorimétrie différentielle à balayage (DSC) en utilisant une vitesse de chauffe de 10°C/min. Le protocole expérimental est détaillé dans la partie exemples ci-après.

Les polyesters thermoplastiques du matériau composite selon l'invention, lorsqu'ils sont semi-cristallins, présentent une température de fusion allant de 210 à 295°C, par exemple de 240 à 285 °C.

Avantageusement, lorsque le polyester thermoplastique est semi-cristallin il présente une chaleur de fusion supérieure à 10 J/g, de préférence supérieure à 20 J/g, la mesure de cette chaleur de fusion consistant à faire subir à un échantillon de ce polyester un traitement thermique à 170°C pendant 16 heures puis à évaluer la chaleur de fusion par DSC en chauffant l'échantillon à 10°C/min.

Le polyester thermoplastique du matériau composite selon l'invention présente notamment une clarté L* supérieure à 40. Avantageusement, la clarté L* est supérieure à 55, de préférence supérieure à 60, tout préférentiellement supérieure à 65, par exemple supérieure à 70. Le paramètre L* peut être déterminé à l'aide d'un spectrophotomètre, en utilisant le modèle CIE Lab.

Enfin, la viscosité réduite en solution du polyester thermoplastique utilisé dans l'étape a) du procédé de l'invention est supérieure à 50 mL/g et de préférence inférieure à 150 mL/g, cette viscosité pouvant être mesurée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L. Ce test de mesure de viscosité réduite en solution est, de par le choix des solvants et de la concentration des polymères utilisés, parfaitement adapté pour déterminer la viscosité du polymère visqueux préparé selon le procédé décrit ci-après.

Le caractère semi-cristallin ou amorphe des polyesters thermoplastiques se caractérise, après un traitement thermique de 16h à 170°C, par la présence ou non de raies de diffraction aux rayons X ou d'un pic de fusion endothermique en Analyse Calorimétrique Différentielle à Balayage (DSC). Ainsi, lorsqu'il y a la présence de raies de diffraction aux rayons X et d'un pic de fusion endothermique en Analyse Calorimétrique Différentielle à Balayage (DSC), le polyester thermoplastique est semi-cristallin, le cas contraire, il est amorphe.

Selon un mode de réalisation particulier, le polyester thermoplastique selon l'invention peut contenir un ou plusieurs additifs, lesdits additifs étant ajoutés au polyester thermoplastique lors de la fabrication du matériau composite afin de lui conférer des propriétés particulières.

Ainsi, à titre d'exemple d'additif, on peut citer les charges ou les fibres de nature organique ou inorganique, nanométriques ou non, fonctionnalisées ou non. Il peut s'agir de silices, de zéolithes, de fibres ou de billes de verre, d'argiles, de mica, de titanates, de silicates, de graphite, de carbonate de calcium, de nanotubes de carbone, de fibres de bois, de fibres de carbone, de fibres de polymère, de protéines, de fibres cellulosiques, de fibres ligno-cellulosiques et d'amidon granulaire non déstructuré. Ces charges ou fibres peuvent permettre d'améliorer la dureté, la rigidité ou l'aspect de surface des pièces imprimées..

L'additif peut également être choisi parmi des agents opacifiants, des colorants et des pigments. Ils peuvent être choisis parmi l'acétate de cobalt et les composés suivants : HS-325 Sandoplast^{®} RED BB (qui est un composé porteur d'une fonction azo également connu sous le nom Solvent Red 195), HS-510 Sandoplast^{®} Blue 2B qui est une anthraquinone, Polysynthren^{®} Blue R, et Clariant^{®} RSB Violet.

L'additif peut être également un agent de résistance aux UV comme par exemple des molécules type benzophénone ou benzotriazole, comme la gamme Tinuvin^{™} de BASF : tinuvin 326, tinuvin P ou le tinuvin 234 par exemple ou des amines encombrées comme la gamme Chimassorb^{™} de BASF : Chimassorb 2020, Chimasorb 81 ou Chimassorb 944 par exemple.

L'additif peut également être un agent ignifuge ou retardateur de flamme, comme par exemple des dérivés halogénés ou des retardateurs de flamme non halogénés (par exemple des dérivés phosphorés, tels que les Exolit^{®} OP) ou comme la gamme des cyanurates mélaminés (par exemple les melapur^{™} : mélapur 200) ou encore des hydroxydes d'aluminium ou de magnésium.

Enfin, l'additif peut également être un agent antistatique ou encore un agent anti-block tel que des dérivés de molécules hydrophobes par exemple les Incroslip^{™} ou Incromol^{™} de Croda.

Selon un mode de réalisation particulier, le polyester thermoplastique utilisé dans le procédé de l'invention représentent de 25 à 75% en poids par rapport au poids total du matériau composite, préférentiellement de 40 à 60 % en poids par rapport au poids total du matériau composite.

Le polyester thermoplastique mis en oeuvre dans le procédé de fabrication du matériau composite selon l'invention peut notamment être préparé selon le procédé décrit dans la demande FR1554597. Plus particulièrement, il être préparé selon le procédé de préparation comprenant :
- une étape d'introduction dans un réacteur de monomères comprenant au moins un 1,4 : 3,6-dianhydrohexitol (A), au moins un diol alicyclique (B) autre que les 1,4 : 3,6-dianhydrohexitols (A) et au moins un acide téréphtalique (C), le ratio molaire ((A)+(B))/(C) allant de 1,05 à 1,5, lesdits monomères étant exempts de diol aliphatique non cyclique ou comprenant, par rapport à la totalité des monomères introduits, une quantité molaire de motifs diol aliphatique non cyclique inférieure à 5% ;
- une étape d'introduction dans le réacteur d'un système catalytique ;
- une étape de polymérisation desdits monomères pour former le polyester, ladite étape consistant en :
   - un premier stade d'oligomérisation pendant lequel le milieu réactionnel est agité sous atmosphère inerte à une température allant de 265 à 280°C, avantageusement de 270 à 280°C, par exemple 275°C ;
   - un second stade de condensation des oligomères pendant lequel les oligomères formés sont agités sous vide à une température allant de 278 à 300°C afin de former le polyester, avantageusement de 280 à 290°C, par exemple 285°C ;
- une étape de récupération du polyester thermoplastique.

Ce premier stade du procédé se fait en atmosphère inerte, c'est-à-dire sous atmosphère d'au moins un gaz inerte. Ce gaz inerte peut notamment être du diazote. Ce premier stade peut se faire sous flux de gaz et il peut également se faire sous pression, par exemple à une pression comprise entre 1,05 et 8 bars.

De préférence, la pression va de 3 à 8 bars, tout préférentiellement de 5 à 7,5 bars, par exemple 6,6 bars. Dans ces conditions de pression préférées, on favorise la réaction de l'ensemble des monomères entre eux en limitant la perte de monomères lors de ce stade.

Préalablement au premier stade d'oligomérisation, une étape de désoxygénation des monomères est préférentiellement réalisée. Elle peut se faire par exemple une fois les monomères introduits dans le réacteur, en réalisant un vide puis en y introduisant un gaz inerte tel que l'azote. Ce cycle vide-introduction de gaz inerte peut être répété à plusieurs reprises, par exemple de 3 à 5 fois. De préférence, ce cycle vide-azote est réalisé à une température entre 60 et 80°C afin que les réactifs, et notamment les diols, soient totalement fondus. Cette étape de désoxygénation présente l'avantage d'améliorer les propriétés de coloration du polyester obtenu à la fin du procédé.

Le second stade de condensation des oligomères se fait sous vide. La pression peut diminuer au cours de ce second stade de manière continue en utilisant des rampes de baisse de pression, par paliers ou encore en utilisant une combinaison de rampes de baisse de pression et de paliers. De préférence, à la fin de ce second stade, la pression est inférieure à 10 mbar, tout préférentiellement inférieure à 1 mbar.

Le premier stade de l'étape de polymérisation a de préférence une durée allant de 20 minutes à 5 heures. Avantageusement, le second stade a une durée allant de 30 minutes à 6 heures, le début de ce stade consistant au moment où le réacteur est placé sous vide, c'est-à-dire à une pression inférieure à 1 bar.

Le procédé comprend en outre une étape d'introduction dans le réacteur d'un système catalytique. Cette étape peut se dérouler préalablement ou pendant l'étape de polymérisation décrite précédemment.

On entend par système catalytique, un catalyseur ou un mélange de catalyseurs, éventuellement dispersé(s) ou fixé(s) sur un support inerte.

Le catalyseur est utilisé dans des quantités adaptées pour obtenir un polyester thermoplastique utilisé dans l'étape a) du procédé de l'invention.

On utilise avantageusement lors du stade d'oligomérisation un catalyseur d'estérification. Ce catalyseur d'estérification peut être choisi parmi les dérivés d'étain, de titane, de zirconium, d'hafnium, de zinc, de manganèse, de calcium, de strontium, des catalyseurs organiques comme l'acide para-toluène sulfonique (APTS), l'acide méthane sulfonique (AMS) ou un mélange de ces catalyseurs. A titre d'exemple de tels composés, on peut citer ceux donnés dans la demande US2011282020A1 aux paragraphes [0026] à [0029], et à la page 5 de la demande WO 2013/062408 A1.

De préférence, on utilise lors du premier stade de transestérification, un dérivé de zinc, ou un dérivé de manganèse d'étain ou de germanium.

A titre d'exemple de quantités massiques, on peut utiliser de 10 à 500 ppm de métal contenu dans le système catalytique lors du stade d'oligomérisation, par rapport à la quantité de monomères introduits.

En fin de transestérification, le catalyseur de la première étape peut être optionnellement bloqué par l'ajout d'acide phosphoreux ou d'acide phosphorique, ou alors comme dans le cas de l'étain (IV) réduit par des phosphites tels que le phosphite de triphenyle ou les phosphite des tris(nonylephenyle) ou ceux cités au paragraphe [0034] de la demande US2011282020A1.

Le second stade de condensation des oligomères peut optionnellement être réalisé avec l'ajout d'un catalyseur. Ce catalyseur est avantageusement choisi parmi les dérivés d'étain, préférentiellement d'étain, de titane, de zirconium, de germanium, d'antimoine, de bismuth, d'hafnium, de magnésium, de cérium, de zinc, de cobalt, de fer, de manganèse, de calcium, de strontium, de sodium, de potassium, d'aluminium, de lithium ou d'un mélange de ces catalyseurs. Des exemples de tels composés peuvent être par exemple ceux donnés dans le brevet EP 1882712 B1 aux paragraphes [0090] à [0094].

De préférence, le catalyseur est un dérivé d'étain, de titane, de germanium, d'aluminium ou d'antimoine.

A titre d'exemple de quantités massiques, on peut utiliser de 10 à 500 ppm de métal contenu dans le système catalytique lors du stade de condensation des oligomères, par rapport à la quantité de monomères introduits.

Tout préférentiellement, on utilise un système catalytique lors du premier stade et du second stade de polymérisation. Ledit système est avantageusement constitué d'un catalyseur à base d'étain ou d'un mélange de catalyseurs à base d'étain, de titane, de germanium et d'aluminium.

A titre d'exemple, on peut utiliser une quantité massique de 10 à 500 ppm de métal contenu dans le système catalytique, par rapport à la quantité de monomères introduits.

Selon le procédé de préparation, on utilise avantageusement un anti-oxydant lors de l'étape de polymérisation des monomères. Ces anti-oxydants permettent de réduire la coloration du polyester obtenu. Les anti-oxydants peuvent être des anti-oxydants primaires et/ou secondaires. L'anti-oxydant primaire peut être un phénol encombré stériquement tels que les composés Hostanox^{®} 0 3, Hostanox^{®} 0 10, Hostanox^{®} 0 16, Ultranox^{®} 210, Ultranox^{®}276, Dovernox^{®} 10, Dovernox^{®} 76, Dovernox^{®} 3114, Irganox^{®} 1010, Irganox^{®} 1076 ou un phosphonate tel que l'Irgamod^{®} 195. L'anti-oxydant secondaire peut être des composés phosphorés trivalents tels que Ultranox^{®} 626, Doverphos^{®} S-9228, Hostanox^{®} P-EPQ, ou l'Irgafos 168.

Il est également possible d'introduire, comme additif de polymérisation dans le réacteur, au moins un composé susceptible de limiter les réactions parasites d'éthérification tel que l'acétate de sodium, le tétraméthylammonium hydroxyde ou le tétraéthylammonium hydroxyde.

Enfin, le procédé comprend une étape de récupération du polyester à l'issue de l'étape de polymérisation. Le polyester thermoplastique ainsi récupéré peut ensuite être conditionné sous une forme facilement manipulable telle que des pellets ou des granulés.

Selon une variante du procédé de synthèse, lorsque le polyester thermoplastique est semi-cristallin, une étape d'augmentation de masse molaire peut être réalisée après l'étape de récupération du polyester thermoplastique.

L'étape d'augmentation de masse molaire est réalisée par post-polymérisation et peut consister en une étape de polycondensation à l'état solide (PCS) du polyester thermoplastique semi-cristallin ou en une étape d'extrusion réactive du polyester thermoplastique semi-cristallin en présence d'au moins un allongeur de chaîne.

Ainsi, selon une première variante du procédé de fabrication, l'étape de post-polymérisation est réalisée par PCS.

La PCS est généralement réalisée à une température comprise entre la température de transition vitreuse et la température de fusion du polymère. Ainsi, pour réaliser la PCS, il est nécessaire que le polymère soit semi-cristallin. De préférence, ce dernier présente une chaleur de fusion supérieure à 10 J/g, de préférence supérieure à 20 J/g, la mesure de cette chaleur de fusion consistant à faire subir à un échantillon de ce polymère de viscosité réduite en solution plus faible un traitement thermique à 170°C pendant 16 heures puis à évaluer la chaleur de fusion par DSC en chauffant l'échantillon à 10 K/min.

Avantageusement, l'étape de PCS est réalisée à une température allant de 190 à 280°C, de préférence allant de 200 à 250°C, cette étape devant impérativement être réalisée à une température inférieure à la température de fusion du polyester thermoplastique semi-cristallin.

L'étape de PCS peut se faire en atmosphère en inerte, par exemple sous azote ou sous argon ou sous vide.

Selon une deuxième variante du procédé de fabrication, l'étape de post-polymérisation est réalisée par extrusion réactive du polyester thermoplastique semi-cristallin en présence d'au moins un allongeur de chaîne.

L'allongeur de chaîne est un composé comprenant deux fonctions susceptibles de réagir, en extrusion réactive, avec des fonctions, alcool, acide carboxylique et/ou ester d'acide carboxylique du polyester thermoplastique semi-cristallin. L'allongeur de chaîne peut par exemple être choisi parmi les composés comprenant deux fonctions isocyanate, isocyanurate, lactame, lactone, carbonate, époxy, oxazoline et imide, lesdites fonctions pouvant être identiques ou différentes. L'allongement de chaîne du polyester thermoplastique peut être effectué dans tous les réacteurs aptes à mélanger un milieu très visqueux avec une agitation suffisamment dispersive pour assurer une bonne interface entre la matière fondue et le ciel gazeux du réacteur. Un réacteur particulièrement adapté à cette étape de traitement est l'extrusion.

L'extrusion réactive peut être réalisée dans une extrudeuse de tout type, notamment une extrudeuse mono-vis, une extrudeuse bi-vis co-rotatives ou une extrudeuse bi-vis contrarotatives. Toutefois, on préfère réaliser cette extrusion réactive en utilisant une extrudeuse co-rotative.

L'étape d'extrusion réactive peut se faire en :
- introduisant le polymère dans l'extrudeuse de manière à faire fondre ledit polymère ;
- puis introduisant dans le polymère fondu l'allongeur de chaîne ;
- puis faisant réagir dans l'extrudeuse le polymère avec l'allongeur de chaîne ;
- puis récupérant le polyester thermoplastique semi-cristallin obtenu à l'étape d'extrusion.

Lors de l'extrusion, la température à l'intérieur de l'extrudeuse est réglée de manière à être à supérieure à la température de fusion du polymère. La température à l'intérieur de l'extrudeuse peut aller de 150 à 320°C.

Le polyester thermoplastique semi-cristallin obtenu après l'étape d'augmentation de masse molaire est récupéré et peut ensuite être conditionné sous une forme facilement manipulable telle que des pellets ou des granulés avant d'être mis de nouveau en forme pour les besoins du procédé de fabrication du matériau composite selon l'invention.

La seconde étape du procédé selon l'invention consiste à fournir des fibres naturelles.

Le terme « fibres » tel qu'utilisé dans la présente invention est synonyme des termes filaments et fils et inclut ainsi les mono ou multi-filament continus ou discontinus, les multi-filaments non tordus ou enchevêtrés et les fils de base.

Les fibres naturelles peuvent être d'origine végétale ou animale, et de préférence elles sont d'origine végétale. A titre d'exemple de fibres naturelles végétales, on citera les fibres de coton, de lin, de chanvre, de chanvre de Manille, de bananier, de jute, de ramie, de raphia de sisal, de genêt, de paille, de foin ou leurs mélanges. D'une manière préférentielle, la fibre naturelle végétale utilisée dans le procédé de l'invention est une fibre de lin.

Les fibres végétales sont constituées de cellulose, d'hémicelluloses et de lignine dont les teneurs moyennes varient suivant la nature des fibres. Par exemple le coton ne contient pas de lignine, le chanvre et le lin environ 2-3% et le bois environ 26%. Le principal constituant des fibres végétales reste cependant la cellulose qui est un polymère semi-cristallin.

Les fibres végétales peuvent se présenter sous une multitude de formes comme par exemple sous la forme de gousses, de tiges, de feuille, de fibres courtes, de fibres longues, de particules, de tissé ou encore de non-tissé. De préférence, pour le procédé de l'invention, les fibres se présentent sous la forme d'un non-tissé.

Un non-tissé au sens de la présente invention peut être un voile, une toile, une nappe ou encore un matelas de fibres réparties directionnellement ou par hasard et dont la cohésion interne est assurée par des méthodes mécaniques, physiques ou chimiques ou encore par une combinaison de ces méthodes. Un exemple de cohésion interne peut être le collage et aboutit à l'obtention d'une toile non-tissée, ladite toile non-tissée pouvant ensuite être mise sous la forme d'un mat de fibres.

Les fibres végétales présentent des propriétés bien spécifiques comme la densité ou la résistance à l'impact..

Ainsi, la densité des fibres utilisées dans le procédé selon l'invention peut être comprise entre 1 et 2 kg/m³, de préférence entre 1,2 et 1,7 kg/m³et de préférence encore entre 1,4 et 1,5 kg/m³.

La contrainte de rupture en traction des fibres peut être comprise entre 0,2 et 3 GPa, et de préférence entre 0,2 et 1 GPa. Les fibres sont également définies selon leur faible propriété d'allongement. Dans le procédé selon l'invention, les fibres utilisées présentent avantageusement un allongement (exprimé en %) compris entre 1 et 10%, de préférence entre 1 et 7%, et de préférence encore entre 1 et 4%.

Selon un mode de réalisation particulier, les fibres naturelles utilisées dans le procédé de l'invention représentent de 25 à 75% en poids par rapport au poids total du matériau composite, préférentiellement de 40 à 60 % en poids.

Enfin, la troisième étape du procédé de l'invention consiste à préparer un matériau composite à partir des fibres naturelles et du polyester thermoplastique tels que décrits précédemment.

Cette étape de préparation peut être réalisée par mélange ou incorporation des fibres naturelles au sein de la matrice de polyester thermoplastique, lesdites fibres n'étant pas séchées préalablement à l'incorporation au sein de ladite matrice.

D'une manière tout à fait surprenante, l'incorporation se réalise parfaitement malgré l'absence d'une étape de séchage. Aucune agrégation des fibres n'est observée et les fibres naturelles sont bien dispersées au sein de la matrice, et les fibres ne présentent pas de phénomène de putréfaction. L'incorporation peut consister à imprégner les fibres naturelles par la matrice en polyester thermoplastique. L'incorporation selon le procédé de l'invention peut se faire par l'intermédiaire des techniques connues de l'homme du métier comme par exemple l'imprégnation par un fondu ou l'imprégnation des fibres à l'aide de poudres.

Après l'imprégnation, une étape de mise en forme peut être mise en oeuvre, ladite mise en forme pouvant également se faire selon les techniques de l'homme du métier comme par exemple par compression/estampage, par pultrusion, par basse pression sous vide ou encore par enroulement filamentaire.

Selon un mode de réalisation particulier, le polyester thermoplastique est extrudé sous forme de feuille, ladite extrusion pouvant être par exemple réalisée par extrusion cast. Lesdites feuilles ainsi extrudées peuvent ensuite être placées de part et d'autre d'un tissé de fibres naturelles au sein d'une presse de manière à former un ensemble constitué d'une couche de fibres naturelles prise entre deux couches de polyester thermoplastique.

Après l'action de la presse et refroidissement, l'ensemble obtenu constitue le matériau composite, les fibres naturelles sont parfaitement incorporées dans le polyester thermoplastique et le matériau forme un tout particulièrement résistant.

Grâce aux très bonnes propriétés du polyester thermoplastique, et notamment à sa fluidité élevée, les fibres naturelles sont correctement imprégnées lors de l'étape d'incorporation et cela, malgré l'absence d'une étape de séchage. Le matériau composite ainsi obtenu présente d'excellentes propriétés mécaniques.

Un second objet de l'invention concerne un matériau composite de faible densité et présentant une bonne résistance à l'impact fabriqué à base de fibres naturelles et de polyester thermoplastique tels que précédemment définis.

L'invention sera mieux comprise à l'aide des exemples et figures ci-après qui se veulent purement illustratifs et ne limitent en rien la portée de la protection.

### Exemples

### A : Polymérisation d'un polyester thermoplastique

Pour cet exemple, le polyester thermoplastique est un polyester amorphe. Dans un réacteur de 7,5L sont ajoutés 859 g (6 mol) de 1,4-cyclohexanedimethanol, 871 g (6 mol) d'isosorbide, 1800 g (10.8 mol) d'acide téréphtalique, 1,5 g d'Irganox 1010 (anti-oxydant) et 1,23 g de dibutylétainoxyde (catalyseur). Pour extraire l'oxygène résiduel des cristaux d'isosorbide, 4 cycles vide-azote sont effectués une fois la température du milieu réactionnel comprise entre 60 et 80°C.

Le mélange réactionnel est ensuite chauffé à 275°C (4°C/min) sous 6,6 bars de pression et sous agitation constante (150 tr/min). Le taux d'estérification est estimé à partir de la quantité de distillat collectée. Puis, la pression est réduite à 0,7 mbar en 90 minutes selon une rampe logarithmique et la température amenée à 285°C.

Ces conditions de vide et de température ont été maintenues jusqu'à obtenir une augmentation de couple de 10Nm par rapport au couple initial. Enfin, un jonc de polymère est coulé par la vanne de fond du réacteur, refroidi dans un bac d'eau thermo-régulé à 15°C et découpé sous forme de granulés d'environ 15 mg.

La résine ainsi obtenue a une viscosité réduite en solution de 54.9 mL/g.

L'analyse par RMN 1H du polyester montre que le polyester final contient 44 mol% d'isosorbide par rapport aux diols. En ce qui concerne les propriétés thermiques (relevées au second chauffage), le polymère présente une température de transition vitreuse de 125°C.

### B : Mise en forme du polyester thermoplastique amorphe par extrusion cast

Les granulés obtenus à l'étape précédente sont séchés sous vide à 110°C pendant 4h, afin d'atteindre un taux d'humidité résiduelle avant la mise en forme de 279 ppm.

Les granulés de polyester thermoplastique obtenus à l'étape précédente sont extrudés sous forme de feuille par extrusion de films à plat, aussi appelée extrusion cast.

L'extrusion cast est réalisée avec une extrudeuse Collin équipée d'une filière plate, l'ensemble étant complété par une calandreuse.

Les granulés sont extrudés sous forme de feuille et les paramètres d'extrusion sont regroupés dans le tableau 1 ci-dessous :

| **Paramètres** | **Unités** | **Valeurs** |
|---|---|---|
| Température (Alimentation -> filière) | °C | 245/250/260/260/260 |
| Vitesse de rotation de la vis | Rpm | 80 |
| Température des rouleaux | °C | 40 |

Les feuilles de polymère thermoplastique ainsi extrudées présentent une épaisseur de 1 mm.

### C : Mise en forme du matériau composite

Pour cette étape, une presse Carver est utilisée.

Un tissé de fibres naturelles de lin est placé entre deux feuilles de polymère thermoplastique telles que précédemment obtenues et l'ensemble est introduit entre les plateaux de la presse avant d'être chauffé à 180°C.

Après un contact de 2 minutes, la température des plateaux est abaissée à 50°C. Une fois refroidis, les plateaux sont écartés et la plaque de matériau composite obtenue est enlevée de la presse.

La fluidité élevée du polyester thermoplastique permet une très bonne imprégnation des fibres naturelles de lin.

Des bandes sont découpées dans les plaques ainsi obtenues. Les propriétés mécaniques, notamment de traction, sont largement améliorées par rapport à la matrice seule. i.e les plaques de polyester thermoplastique

## Revendications

1. Procédé de fabrication d'un matériau composite, ledit procédé comprenant les étapes suivantes de :
a) fourniture d'un polymère thermoplastique,
b) fourniture de fibres naturelles,
c) préparation d'un matériau composite à partir desdites fibres naturelles et dudit polymère thermoplastique,
ledit procédé étant **caractérisé en ce que** les fibres naturelles ne sont pas séchées préalablement à la préparation du matériau composite et **en ce que** le polymère est un polyester thermoplastique comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio (A)/[(A)+(B)] étant d'au moins 0,05 et d'au plus 0,75, ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 50 mL/g, où la viscosité réduite en solution est mesurée comme indiqué dans la description.

2. Procédé de fabrication selon la revendication 1, **caractérisé en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

3. Procédé de fabrication selon l'une des revendications 1 à 2, **caractérisé en ce que** le 1,4 : 3,6-dianhydrohexitol (A) est l'isosorbide.

4. Procédé de fabrication selon l'une des revendications 1 à 3, **caractérisé en ce que** le polyester est exempt de motif diol aliphatique non cyclique ou comprend une quantité molaire de motifs diol aliphatique non cyclique, par rapport à la totalité des motifs monomériques du polyester, inférieure à 1%, de préférence le polyester est exempt de motif diol aliphatique non cyclique.

5. Procédé de fabrication selon l'une des revendications 1 à 4, **caractérisé en ce que** le ratio molaire (motif 3,6-dianhydrohexitol (A) + motif diol alicyclique (B) autre que les motifs 1,4 : 3,6-dianhydrohexitol (A))/( motif acide téréphtalique (C)) est de 1,05 à 1,5.

6. Procédé de fabrication selon l'une des revendications 1 à 5, **caractérisé en ce que** les fibres naturelles sont des fibres de coton, de lin, de chanvre, de chanvre de Manille, de bananier, de jute, de ramie, de raphia de sisal, de genêt, de paille, de foin ou leur mélange.

7. Procédé de fabrication selon l'une des revendications 1 à 6, **caractérisé en ce que** les fibres naturelles sont des fibres de lin.

8. Procédé de fabrication selon l'une des revendications 1 à 7, **caractérisé en ce que** l'étape de préparation est une étape d'incorporation réalisée à l'aide d'une presse.

## Patentansprüche

1. Verfahren zur Herstellung eines Verbundmaterials, wobei das Verfahren die folgenden Schritte umfasst:
a) Bereitstellen eines thermoplastischen Polymers,
b) Bereitstellung von Naturfasern,
c) Herstellen eines Verbundmaterials aus den Naturfasern und dem thermoplastischen Polymer,
wobei das Verfahren **dadurch gekennzeichnet ist, dass** die Naturfasern vor der Herstellung des Verbundmaterials nicht getrocknet werden und dass das Polymer ein thermoplastischer Polyester ist, der mindestens eine 1,4 : 3,6-Dianhydrohexitol-Einheit (A), mindestens eine alizyklische Diol-Einheit (B), die von den 1,4 : 3,6-Dianhydrohexitol-Einheiten verschieden ist, und mindestens eine Terephthalsäure-Einheit (C) umfasst, wobei das Verhältnis (A) / [(A)+(B)] mindestens 0,05 und höchstens 0,75 beträgt, wobei der Polyester frei von nicht-zyklischen aliphatischen Diol-Einheiten ist oder eine molare Menge an nicht-zyklischen aliphatischen Diol-Einheiten, bezogen auf die Gesamtheit der Monomer-Einheiten des Polyesters, von weniger als 5 % umfasst, und dessen reduzierte Viskosität in Lösung (25°C ; Phenol (50%m) : ortho-Dichlorbenzol (50%m); 5 g/L Polyester) größer als 50 mUg ist, wobei die reduzierte Viskosität in Lösung wie in der Beschreibung angegeben gemessen wird.

2. Herstellungsverfahren nach Anspruch 1, **dadurch gekennzeichnet, dass** das alizyklische Diol (B) ein Diol ist, das aus 1,4-Cyclohexandimethanol, 1,2-Cyclohexandimethanol, 1,3-Cyclohexandimethanol oder einer Mischung dieser Diole ausgewählt ist, sehr bevorzugt 1,4-Cyclohexandimethanol.

3. Herstellungsverfahren nach einem der Ansprüche 1 bis 2, **dadurch gekennzeichnet, dass** das 1,4: 3,6- Dianhydrohexitol (A) Isosorbid ist.

4. Herstellungsverfahren nach einem der Ansprüche 1 bis 3, **dadurch gekennzeichnet, dass** der Polyester frei von nicht-zyklischen aliphatischen Diol-Einheiten ist oder eine molare Menge an nicht-zyklischen aliphatischen Diol-Einheiten, bezogen auf die Gesamtheit der Monomer-Einheiten des Polyesters, von weniger als 1 % umfasst, vorzugsweise ist der Polyester frei von nicht-zyklischen aliphatischen Diol-Einheiten.

5. Herstellungsverfahren nach einem der Ansprüche 1 bis 4, **dadurch gekennzeichnet, dass** das Molverhältnis (3,6-Dianhydrohexitol-Einheit (A) + alizyklische Diol-Einheit (B), die von 1,4: 3,6-Dianhydrohexitol-Einheiten (A) verschieden ist) / (Terephthalsäure-Einheit (C)) 1,05 bis 1,5 beträgt.

6. Herstellungsverfahren nach einem der Ansprüche 1 bis 5, **dadurch gekennzeichnet, dass** die Naturfasern Fasern aus Baumwolle, Flachs, Hanf, Manilahanf, Bananenbaum, Jute, Ramie, Sisalbast, Ginster, Stroh, Heu oder deren Mischungen sind.

7. Herstellungsverfahren nach einem der Ansprüche 1 bis 6, **dadurch gekennzeichnet, dass** die Naturfasern Flachsfasern sind.

8. Herstellungsverfahren nach einem der Ansprüche 1 bis 7, **dadurch gekennzeichnet, dass** der Herstellungsschritt ein Einarbeitungsschritt ist, der mithilfe einer Presse durchgeführt wird.

## Claims

1. A process for producing a composite material, said process comprising the following steps of:
a) providing a thermoplastic polymer,
b) providing natural fibers,
c) preparing a composite material from said natural fibers and said thermoplastic polymer,
said process being **characterized in that** the polymer is a thermoplastic polyester comprising at least one 1,4: 3,6-dianhydrohexitol unit (A), at least one alicyclic diol unit (B) other than the 1,4: 3,6-dianhydrohexitol units (A), at least one terephthalic acid unit (C), wherein the (A)/[(A)+(B)] ratio is at least 0.05 and at most 0.75, said polyester not containing any aliphatic non-cyclic diol units or comprising a molar amount of aliphatic non-cyclic diol units, relative to all the monomer units of the polyester, of less than 5%, and the reduced viscosity in solution (25°C; phenol (50%m): ortho-dichlorobenzene (50%m); 5 g/l of polyester) of which is greater than 50 ml/g; wherein the reduced viscosity in solution is measured as indicated in the description.

2. The production process as claimed in claim 1, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

3. The production process as claimed in one of claims 1 to 2, **characterized in that** the 1,4: 3,6-dianhydrohexitol (A) is isosorbide.

4. The production process as claimed in one of claims 1 to 3, **characterized in that** the polyester does not contain any aliphatic non-cyclic diol units, or comprises a molar amount of aliphatic non-cyclic diol units, relative to all the monomer units of the polyester, of less than 1%, preferably the polyester does not contain any aliphatic non-cyclic diol units.

5. The production process as claimed in one of claims 1 to 4, **characterized in that** the (3,6-dianhydrohexitol unit (A) + alicyclic diol unit (B) other than the 1,4: 3,6-dianhydrohexitol units (A))/(terephthalic acid unit (C)) molar ratio is from 1.05 to 1.5.

6. The production process as claimed in one of claims 1 to 5, **characterized in that** the natural fibers are fibers of cotton, flax, hemp, Manila hemp, banana, jute, ramie, sisal raffia, broom, straw, hay or a mixture thereof.

7. The production process as claimed in one of claims 1 to 6, **characterized in that** the natural fibers are flax fibers.

8. The production process as claimed in one of claims 1 to 7, **characterized in that** the preparation step is a step of incorporation carried out using a press.
